# EUROPÄISCHE PATENTSCHRIFT

(11) **EP 2 728 195 B1**
(45) Veröffentlichungstag und Bekanntmachung des Hinweises auf die Patenterteilung: **29.08.2018**
(21) Anmeldenummer: 13190822.0
(22) Anmeldetag: 30.10.2013
(51) Int. Cl.: F04D 19/04, F04D 29/059, F04D 29/063, F16N 19/00

(54) **Vakuumpumpe**
Vacuum pump
Pompe à vide

(30) Priorität: 02.11.2012 DE 102012220040
(43) Veröffentlichungstag der Anmeldung: 07.05.2014
(73) Patentinhaber: PFEIFFER VACUUM GMBH, 35614 Asslar (DE)
(72) Erfinder: Schill, Michael, 35614 Asslar-Bechlingen (DE)
(74) Vertreter: Manitz Finsterwald Patentanwälte PartmbB

(56) Entgegenhaltungen:
- EP-A1- 0 348 931
- EP-A2- 1 780 418
- EP-A2- 1 921 322
- DE-A1- 2 263 612
- DE-A1- 2 309 665
- JP-A- S5 874 898
- US-A- 4 767 265
- US-A- 5 664 935

## Beschreibung

Die vorliegende Erfindung betrifft eine Vakuumpumpe, insbesondere eine Turbomolekularpumpe, mit einer Rotorwelle, einem Drehlager zur drehbaren Unterstützung der Rotorwelle und einem Betriebsmittelspeicher zur Aufnahme eines Betriebsmittels, mit dem das Drehlager zu versorgen ist.

Bekannte Vakuumpumpen weisen einen um die Rotationsachse der Rotorwelle bzw. des Drehlagers rotationssymmetrisch ausgebildeten Betriebsmittelspeicher auf, welcher typischerweise die Form eines Zylindermantels mit zylindermantelförmiger Außenkontur und Innenkontur aufweist und beispielsweise als Stapel von kreisringförmigen Scheiben aus Filz oder einem anderen saugfähigen Material ausgebildet ist.

Der Betriebsmittelspeicher soll eine gewisse Mindestspeicherkapazität aufweisen, so dass eventuelle Leckageverluste ausgeglichen werden und ein Wiederbefüllen des Betriebsmittelspeichers mit Betriebsmittel nur in langen Zeitintervallen erforderlich ist und folglich eine zuverlässige Betriebsmittelversorgung bei geringem Wartungsaufwand erreicht wird. Bei bekannten Vakuumpumpen ist die maximale radiale Ausdehnung des Betriebsmittelspeichers durch die in radialer Richtung zu dem Betriebsmittelspeicher nächstgelegenen Nachbarkomponenten der Pumpe beschränkt. Um eine gewünschte Speicherkapazität des Betriebsmittelspeichers zu erreichen, muss deshalb ein Betriebsmittelspeicher mit einer erheblichen axialen Ausdehnung vorgesehen werden, wodurch die axiale Bauhöhe der Vakuumpumpe insgesamt erhöht wird und eine weitere Miniaturisierung der Vakuumpumpe erschwert wird.

Aus der DE 22 63 612 A1 ist eine Vakuumpumpe gemäß dem Oberbegriff des Anspruchs 1 bekannt.

In der JP S58 74898 A ist eine ähnliche Vakuumpumpe beschrieben, bei der ein Betriebsmittelspeicher nicht rotationssymmetrisch zur Drehachse der Vakuumpumpe angeordnet ist.

Auch die EP 1 780 418 A2 zeigt eine ähnliche Vakuumpumpe mit einem nicht rotationssymmetrischen Betriebsmittelspeicher.

Die DE 23 09 665 A1 beschreibt ebenfalls eine ähnliche Vakuumpumpe, bei welcher ein Betriebsmittelspeicher eine Erweiterung in radialer Richtung aufweist.

Auch in der EP 1 921 322 A2 ist eine ähnliche Vakuumpumpe beschrieben, bei der jedoch ein Primär- und ein Sekundärspeicher für ein Betriebsmittel rotationssymmetrisch zur Drehachse der Vakuumpumpe angeordnet sind.

Ferner zeigt auch die US 5 664 935 A eine ähnliche Vakuumpumpe mit einem rotationssymmetrischen Betriebsmittelspeicher.

Eine solche Vakuumpumpe ist auch in der US 4 767 265 A beschrieben.

Darüber hinaus zeigt die EP 0 348 931 A1 eine Vakuumpumpe mit zwei Kammern, die innerhalb eines Stators der Vakuumpumpe angeordnet sind und jeweils ein Drehlager eines Rotors der Vakuumpumpe mit einem Betriebsmittel versorgen.

Die Aufgabe der Erfindung ist daher, eine Vakuumpumpe der eingangs genannten Art zu schaffen, die bei geringem Wartungsaufwand während ihres Betriebs eine dauerhaft zuverlässige Versorgung des Drehlagers mit Betriebsmittel gewährleistet und die gleichzeitig auf geringem Bauraum realisiert werden kann.

Diese Aufgabe wird durch eine Vakuumpumpe mit den Merkmalen des Anspruchs 1 gelöst.

Die Vakuumpumpe umfasst eine Rotorwelle, ein Drehlager zur drehbaren Unterstützung der Rotorwelle und einen Betriebsmittelspeicher zur Aufnahme eines Betriebsmittels, mit dem das Drehlager zu versorgen ist. Der Betriebsmittelspeicher weist eine nicht rotationssymmetrische Form auf.

Durch die nicht rotationssymmetrische Form des Betriebsmittelspeichers wird der in der Vakuumpumpe zur Verfügung stehende Bauraum effizienter ausgenutzt, da Teile des Betriebsmittelspeichers in ohnehin vorhandenem Bauraum angeordnet werden können, der ansonsten ungenutzt bleibt. Beispielsweise können Zwischenräume zwischen in Umfangsrichtung um die Rotationsachse des Drehlagers verteilt angeordneten Pumpenkomponenten zur Speicherung von Betriebsmittel genutzt werden. Dadurch kann auf eine Vergrößerung der äußeren Abmessungen der Vakuumpumpe verzichtet werden, so dass eine kompakte Vakuumpumpe bei gleichzeitig hoher Speicherkapazität des Betriebsmittelspeichers geschaffen wird.

Der Betriebsmittelspeicher umfasst einen Primärspeicher und wenigstens einen Sekundärspeicher. Der Primärspeicher ist dabei in an sich bekannter Weise rotationssymmetrisch zu der durch das Drehlager definierten Rotationsachse ausgebildet.
Der Primärspeicher kann um einen insbesondere konischen Abschnitt der Rotorwelle herum angeordnet sein und deckt dabei den gesamten Drehwinkelbereich um die Rotationsachse ab. Der Primärspeicher kann die Form eines zu der Rotationsachse des Drehlagers rotationssymmetrischen Zylindermantels aufweisen und kann eine zylindermantelförmige Innenkontur und/oder eine zylindermantelförmige Außenkontur aufweisen.
Ein solcher Primärspeicher führt zu einer gleichmäßigen Zuführung von Betriebsmittel zu dem Drehlager. Vorzugsweise ist der Primärspeicher direkt mit einem oder mehreren Abstreifern verbunden, die sich beispielsweise ausgehend von dem Primärspeicher über die Innenkontur des Primärspeichers hinaus in radialer Richtung nach innen erstrecken. Es können dabei mehrere, in Umfangsrichtung um die Rotationsachse herum angeordnete und insbesondere in Bezug auf den durch die Rotationsachse definierten Rotationswinkel gleich beabstandete Abstreifer vorgesehen sein. Der oder die Abstreifer können mit einem insbesondere konischen Abschnitt der Rotorwelle in gleitendem Kontakt stehen, um das aus dem Primärspeicher austretende Betriebsmittel an die Rotorwelle abzugeben. Ein Abstreifer weist vorzugsweise ein kapillares Fördermaterial wie z.B. ein filzartiges Material auf. Das abgestreifte Betriebsmittel wandert bei dem Betrieb der Pumpe aufgrund der Kapillarkraft und der Fliehkraft an der Rotorwelle entlang zu dem Drehlager.

Zusätzlich zu dem rotationssymmetrischen Primärspeicher ist erfindungsgemäß ein Sekundärspeicher vorgesehen, welcher eine zusätzliche Speicherkapazität für den Betriebsmittelspeicher schafft. Dadurch kann der Primärspeicher bei gleicher Gesamtspeicherkapazität kleiner ausgestaltet werden und der Sekundärspeicher kann ohnehin vorhandenen, ansonsten ungenutzten Bauraum der Pumpe nutzen, so dass die äußeren Abmessungen der Pumpe, insbesondere in radialer und/oder axialer Richtung, durch den Betriebsmittelspeicher nur wenig oder gar nicht vergrößert werden.

Ein Förderweg des Betriebsmittels führt von dem Sekundärspeicher über den Primärspeicher zu dem Drehlager. Der Sekundärspeicher kann auf diese Weise als Zwischenspeicher dienen, welcher über den Primärspeicher in die Betriebsmittelzufuhr des Drehlagers eingebunden ist, so dass ein Förderweg für das Betriebsmittel von dem Sekundärspeicher über den Primärspeicher zu dem Drehlager führt.
Der Sekundärspeicher ist ferner bezogen auf die Rotationsachse des Drehlagers in axialer Richtung weiter von dem Drehlager beabstandet sein als der Primärspeicher. In diesen Bereichen ist typischerweise ungenutzter Bauraum vorhanden, der von dem Sekundärspeicher für die Betriebsmittelspeicherung erschlossen werden kann.
Erfindungsgemäß ist der Sekundärspeicher mit einem Fördermittel verbunden, welches dazu ausgebildet ist, Betriebsmittel von dem Drehlager zu dem Sekundärspeicher zu fördern. Dadurch wird ein durch den Sekundärspeicher hindurch verlaufender geschlossener Kreislauf für das Betriebsmittel gebildet, so dass das in dem Sekundärspeicher gespeicherte Betriebsmittel besonders wirksam zur Versorgung des Drehlagers beiträgt. Das Fördermittel zwischen dem Drehlager und dem Sekundärspeicher kann dabei wie vorstehend in Bezug auf das Fördermittel zwischen dem Sekundärspeicher und dem Primärspeicher beschrieben ausgebildet sein und kann insbesondere als poröser stabförmiger Körper ausgebildet sein, welcher eine auf kapillarer Wirkung basierende Förderwirkung nach der Art eines Dochts besitzt.

Vorteilhafte Ausführungsformen der Erfindung sind in den Unteransprüchen, der Beschreibung und den Figuren beschrieben.

Der Sekundärspeicher kann zusätzlich bezogen auf die Rotationsachse des Drehlagers in radialer Richtung weiter von dem Drehlager beabstandet sein als der Primärspeicher.

Der Sekundärspeicher kann einen Fortsatz des Primärspeichers bilden. Der Sekundärspeicher und der Primärspeicher können dabei zusammen ein unmittelbar zusammenhängendes, ununterbrochenes Speichervolumen bilden, wobei aus dem Sekundärspeicher austretendes Betriebsmittel vorzugsweise direkt in den Primärspeicher und über den Primärspeicher zu dem Drehlager gelangt. Der zusammenhängende Speicher weist dabei vorzugsweise eine nicht rotationssymmetrische Außenkontur auf. Eine Innenkontur des zusammenhängenden Speichers ist bevorzugt durch die Innenkontur des Primärspeichers gebildet und kann eine zu der Rotationsachse rotationssymmetrische Form aufweisen, beispielsweise die Form eines Zylindermantels. Der Sekundärspeicher kann einen in radialer Richtung nach außen vorstehenden Fortsatz des Primärspeichers bilden, welcher in Rotationsachsenrichtung betrachtet z.B. im Wesentlichen keulenförmig oder pilzkopfförmig ausgestaltet ist oder im Wesentlichen eine Form aufweist, welche sich durch eine Verschiebung des Primärspeichers in radialer Richtung ergibt.

Auf diese Weise lassen sich in unmittelbarer Nähe des Primärspeichers vorhandene Bauräume ausnutzen, so dass die Speicherkapazität des Betriebsmittelspeichers erhöht werden kann und gleichzeitig eine geringe mittlere Entfernung des gespeicherten Betriebsmittels von dem Drehlager und folglich eine effiziente Betriebsmittelversorgung gewährleistet wird. Zwischen dem Sekundärspeicher und dem Primärspeicher kann eine Grenzfläche ausgebildet sein, an der die beiden Speicher ineinander übergehen. Eine solche Grenzfläche kann beispielsweise durch die Berührfläche von entlang ihrer Stirnflächen aneinanderstoßenden Scheiben aus einem porösen Material wie zum Beispiel Filz gebildet sein. Der Sekundärspeicher und der Primärspeicher können aber auch einen materialeinheitlichen Übergang aufweisen und durch eine rein gedankliche Grenzfläche voneinander abgegrenzt sein, beispielsweise wenn der Sekundärspeicher und der Primärspeicher durch verschiedene Bereiche einer oder mehrerer gemeinsamer Filzscheiben gebildet sind.

Der Sekundärspeicher kann auch von dem Primärspeicher räumlich getrennt sein. Dadurch kann Bauraum für den Speicher erschlossen werden, der nicht unmittelbar mit dem durch den Primärspeicher beanspruchten Bauraum verbunden ist. Der verfügbare Bauraum kann auf diese Weise noch flexibler und vollständiger genutzt werden. Vorzugsweise ist der Sekundärspeicher über ein Fördermittel für das Betriebsmittel mit dem Primärspeicher verbunden. Dabei kann ein Förderweg des Betriebsmittels von dem Sekundärspeicher über das Fördermittel zu dem Primärspeicher und über den Primärspeicher zu dem Drehlager führen.

Das Fördermittel ist vorzugsweise als kapillares Fördermittel ausgebildet und kann eine Förderung des Betriebsmittels durch kapillare Wirkung nach der Art eines Dochts bewirken. Das Fördermittel kann durch einen bevorzugt stabförmigen Körper mit z.B. rundem Querschnitt gebildet sein und kann ein poröses Material wie insbesondere poröses Polyethylen, poröses Polytetrafluorethylen oder Poroplast umfassen. Der Sekundärspeicher besitzt eine nicht rotationssymmetrische Form oder zumindest eine zu der Rotationsachse des Drehlagers nicht rotationssymmetrische Form. Dadurch kann in der Pumpe vorhandener Bauraum für die Speicherung von Betriebsmittel genutzt werden, der eine Form aufweist, die von einer um die Rotationsachse rotationssymmetrischen Form abweicht.
Der Betriebsmittelspeicher kann prinzipiell genau einen Primärspeicher und genau einen Sekundärspeicher umfassen. Der Betriebsmittelspeicher kann auch mehrere Sekundärspeicher umfassen, wobei jeder Sekundärspeicher gemäß einer oder mehreren der vorstehend beschriebenen Ausführungsformen ausgebildet sein kann. Die Verwendung mehrerer Sekundärspeicher erlaubt eine besonders effiziente Ausnutzung des in der Pumpe zur Verfügung stehenden Bauraums. Beispielweise können mehrere Sekundärspeicher in Umfangsrichtung um die Rotationsachse des Drehlagers herum verteilt angeordnet sein, um in voneinander beabstandeten Winkelbereichen der Pumpe gelegene Bauräume auszunutzen.
Der Betriebsmittelspeicher kann im Vergleich zu einer hypothetischen, den Betriebsmittelspeicher einhüllenden und, insbesondere zu der Rotationsachse des Drehlagers, rotationssymmetrischen Form eine oder mehrere Aussparungen aufweisen. Gemäß einer Ausführungsform ist eine von dem Drehlager und der Betriebsmittelversorgung unabhängige Pumpenkomponente zumindest teilweise in einer solchen Aussparung angeordnet. Dadurch wird eine besonders effiziente Nutzung des vorhandenen Bauraums durch den Betriebsmittelspeicher und die in dessen Aussparung angeordnete Pumpenkomponente erreicht. Der Betriebsmittelspeicher kann keine, eine, zwei, drei oder mehr zu der durch das Drehlager definierten Rotationsachse parallele Symmetrieebenen aufweisen, ohne aber rotationssymmetrisch zu der Rotationsachse ausgebildet zu sein.

Der Betriebsmittelspeicher umfasst bevorzugt ein in Bezug auf das Betriebsmittel saugfähiges Material. Beispielsweise kann es sich um ein faseriges und insbesondere filzartiges bzw. als Filz ausgebildetes Material handeln. Dadurch wird gewährleistet, dass das in dem Betriebsmittelspeicher gespeicherte Betriebsmittel nicht unkontrolliert aus dem Speicher bzw. dem Betriebsmittelkreislauf austreten kann. Somit kann eine Leckage des Betriebsmittels in allen Einbaulagen der Pumpe und dementsprechend unabhängig von der Orientierung der Gewichtskraft in der Pumpe, also von der Orientierung der Pumpe im Raum, zuverlässig vermieden werden. Der Betriebsmittelspeicher bzw. ein Primär- und/oder Sekundärspeicher desselben kann aus einem Stapel von insbesondere in Rotationsachsenrichtung aufeinander gelegten Scheiben bestehen, z.B. Filzscheiben. Eine gewünschte Form des Betriebsmittelspeichers lässt sich so in besonders einfacher Weise realisieren.

Die Rotorwelle kann einen Abschnitt aufweisen, welcher mit einem oder mehreren Abstreifern in gleitendem Kontakt steht und einen sich ausgehend von den Abstreifern zu dem Drehlager hin vergrößernden Durchmesser aufweist und insbesondere konisch ausgebildet ist. Der Abschnitt kann dazu dienen, von dem Betriebsmittelspeicher bereitgestelltes Betriebsmittel zu dem Drehlager zu fördern und kann sich in einen durch die Innenkontur des Betriebsmittelspeichers definierten Innenraum erstrecken. Der bevorzugt konische Abschnitt kann insbesondere durch eine an einem Ende der Rotorwelle aufgeschraubte Spritzmutter gebildet sein. Vorzugsweise ist der Abschnitt koaxial zu der Rotationsachse der Rotorwelle angeordnet. Der Durchmesser des Abschnitts nimmt dabei von dem Bereich, in dem der konische Abschnitt mit den Abstreifern in Verbindung steht, zu dem Drehlager bevorzugt kontinuierlich zu. Das abgestreifte Betriebsmittel wandert infolge der Kapillarkraft und der durch die Rotation der Rotorwelle hervorgerufenen Fliehkraft zu den Bereichen des konischen Abschnitts mit größerem Durchmesser, d.h. zu dem Drehlager hin.

Das Betriebsmittel gelangt auf diese Weise in das Drehlager, wo es seine gewünschte Wirkung entfaltet. Beispielsweise kann es sich bei dem Betriebsmittel um ein Schmiermittel handeln, welches eine Schmierung des Drehlagers bewirkt und welches Perfluorpolyether enthalten oder daraus bestehen kann.

Auf der von dem Betriebsmittelspeicher abgewandten Seite des Drehlagers ist vorzugsweise ein Ablauf des Drehlagers vorgesehen, in dem sich das Betriebsmittel infolge der Rotation des Drehlagers sammelt. Im Bereich des Ablaufs kann eine Dichtung, vorzugsweise eine dynamische Dichtung, zwischen dem Stator und der Rotorwelle angeordnet sein, welche eine Leckage von Betriebsmittel, insbesondere in Richtung zu einer Pumpstufe der Pumpe hin, verhindert. Der Ablauf ist vorzugsweise mit einem Rücklauf verbunden, über den das Betriebsmittel zurück in den Betriebsmittelspeicher gelangt. Der Rücklauf kann einen oder mehrere Förderkanäle und/oder Fördermittel umfassen, welche mit dem Betriebsmittelspeicher verbunden sind. Beispielsweise kann ein radialer Förderkanal vorgesehen sein, über den das Betriebsmittel in radialer Richtung nach außen gefördert wird.

Das radiale Fördermittel bzw. der Förderkanal kann in ein axiales Fördermittel bzw. einen axialen Förderkanal münden, durch den das Betriebsmittel zurück zu dem Betriebsmittelspeicher gelangt. Anstelle eines axialen Förderkanals kann auch ein zu der axialen Richtung geneigt angeordneter Förderkanal bzw. ein Fördermittel vorgesehen sein, insbesondere wenn das Fördermittel von dem Drehlager zu einem in radialer Richtung von einem Primärspeicher beabstandeten Sekundärspeicher verläuft.

Das zu dem Betriebsmittelspeicher zurückgeführte Betriebsmittel steht dann erneut zur Zuführung zu dem Drehlager zur Verfügung.

Die Betriebsmittelversorgung des Drehlagers bildet vorzugsweise einen geschlossenen Kreislauf. Die Förderung des Betriebsmittels während des Betriebs der Pumpe kann dabei rein durch die kapillare Wirkung und die durch die Rotation der Rotorwelle hervorgerufene Fliehkraft bewirkt werden, so dass insbesondere kein weiteres aktives Fördermittel wie z.B. eine Betriebsmittelpumpe notwendig ist. Dadurch wird ein besonders einfacher Aufbau erreicht.

Bei der Vakuumpumpe handelt es sich vorzugsweise um eine Turbomolekularpumpe, welche eine oder mehrere turbomolekulare Pumpstufen umfasst. Zudem kann die Vakuumpumpe eine oder mehrere insbesondere stromabwärts der turbomolekularen Pumpstufen angeordnete molekulare Pumpstufen, insbesondere eine oder mehrere Holweckstufen und/oder eine oder mehrere Siegbahn- und/oder Seitenkanalpumpstufen, umfassen. Die Rotorwelle kann ein oder mehrere Rotorelemente einer oder mehrerer Pumpstufen tragen, wie z.B. eine oder mehrere mit Schaufeln versehene Rotorscheiben einer turbomolekularen Pumpstufe oder eine oder mehrere zylindermantelförmige Holweckhülsen einer Holweckstufe.

Die Vakuumpumpe kann eine elektrische Antriebseinheit umfassen, mit der die Rotorwelle drehend antreibbar ist, beispielsweise bis zu einer Drehzahl von mehreren zehntausend Umdrehungen pro Minute. Das Drehlager ist vorzugsweise als Wälzlager ausgebildet und definiert eine Rotationsachse, auf die sich die hierin beschriebenen Begriffe "axial" und "radial" beziehen. Daneben kann die Vakuumpumpe noch ein weiteres Drehlager umfassen, welches z.B. in axialer Richtung näher an einem Pumpeneinlass der Pumpe angeordnet ist als das mit dem Betriebsmittel versorgte Drehlager und welches als ungeschmiertes bzw. betriebsmittelfreies Drehlager und insbesondere als Magnetlager ausgebildet sein kann.

Nachfolgend wird die vorliegende Erfindung anhand vorteilhafter Beispiele unter Bezugnahme auf die beigefügten Figuren beschrieben. Es zeigen:
- Fig. 1: eine Pumpe gemäß dem Stand der Technik im Axialschnitt,
- Fig. 2: eine Pumpe gemäß einem Beispiel im Axialschnitt,
- Fig. 3: eine Pumpe gemäß einem weiteren Beispiel im Axialschnitt,
- Fig. 4: die Pumpe von Fig. 3 in axialer Richtung von unten gesehen,
- Fig. 5: eine Pumpe gemäß einem weiteren Beispiel im Axialschnitt,
- Fig. 6: einen Teil der in Fig. 5 gezeigten Pumpe in axialer Richtung von oben gesehen,
- Fig. 7: eine Pumpe gemäß einem weiteren Beispiel im Axialschnitt,
- Fig. 8: einen Teil der in Fig. 7 gezeigten Pumpe in axialer Richtung von oben gesehen,
- Fig. 9: einen Teil einer Pumpe gemäß einem weiteren Beispiel in axialer Richtung von oben gesehen und
- Fig. 10: einen Teil einer Pumpe gemäß einem weiteren Beispiel in axialer Richtung von oben gesehen.

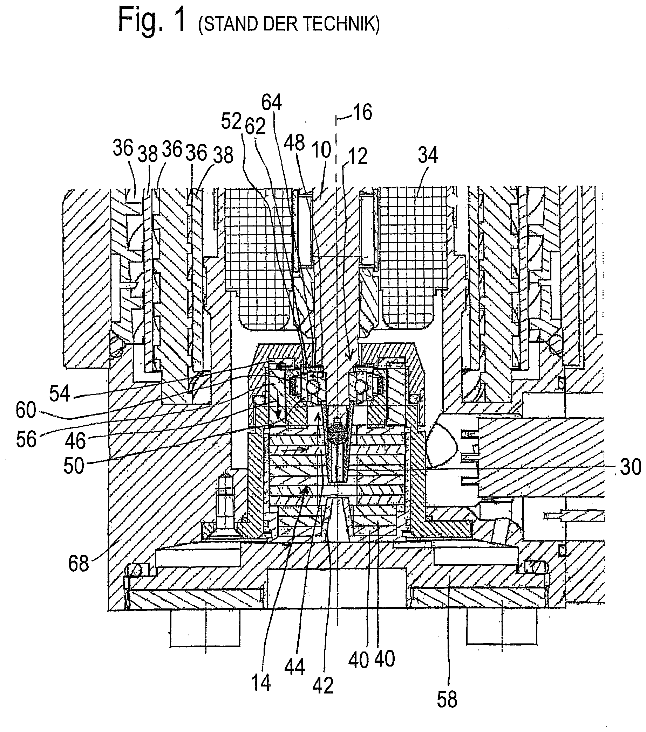

Fig. 1 zeigt eine Vakuumpumpe gemäß dem Stand der Technik, wobei in Fig. 1 nur der untere Teil der Vakuumpumpe dargestellt ist.
Die Vakuumpumpe umfasst eine Rotorwelle 10, die durch eine elektromotorische Antriebseinheit 34 um eine Rotationsachse 16 drehend antreibbar ist. An der Rotorwelle 10 sind die rotierenden Elemente verschiedener Pumpstufen der Vakuumpumpe zur gemeinsamen Rotation mit der Rotorwelle 10 angeordnet. Die in Fig. 1 gezeigte Vakuumpumpe umfasst drei in radialer Richtung ineinander geschachtelte Holweckstufen, die jeweils ein statorseitiges Holweckgewinde 36 mit schraubenlinienförmigen Gewindenuten und dazwischen angeordneten schraubenlinienförmigen Gewindevorsprüngen bzw. Stegen umfassen, sowie eine Holweckrotorhülse 38 mit einer glatten Oberfläche, die dem Holweckgewinde 36 unter Ausbildung eines engen Spalts zwischen der Oberfläche der Holweckhülse 38 und den Gewindevorsprüngen des Holweckgewindes 36 gegenüberliegt und relativ zu dem Holweckgewinde 36 rotieren kann. Dabei wird das in den Holwecknuten vorhandene Gas entlang der schraubenlinienförmigen Holwecknuten angetrieben, wodurch die gewünschte Förder- und Pumpwirkung der Holweckstufe erzielt wird.

Das Gas durchströmt die drei Holweckstufen in der Reihenfolge von radial außen nach radial innen, wobei, wie in Fig. 1 gezeigt, die in axialer Richtung gemessene Breite der Gewindenuten von Holweckstufe zu Holweckstufe abnimmt und die Orientierung der Gewindesteigung in Bezug auf die axiale Richtung, und dementsprechend die Förderrichtung von oben nach unten bzw. von unten nach oben, von Holweckstufe zu Holweckstufe abwechseln. Das am unteren Ende der innersten Holweckstufe austretende Gas kann durch einen in Fig. 1 nicht dargestellten Pumpenauslass der Vakuumpumpe abgeleitet werden. In dem in Fig. 1 nicht gezeigten oberen Teil der Vakuumpumpe kann ein Pumpeneinlass angeordnet sein und ein oder mehrere zwischen dem Pumpeneinlass und den Holweckstufen angeordnete stromaufwärtige turbomolekulare Pumpstufen, welche eine oder mehrere in radialer Richtung orientierte, mit Schaufeln versehene Rotorscheiben und den Rotorscheiben gegenüberliegende, in radialer Richtung orientierte und mit Schaufeln versehene Statorscheiben umfassen.

An ihrem in der Darstellung von Fig. 1 unteren axialen Ende ist die Rotorwelle 10 durch ein als Wälzlager ausgebildetes Drehlager 12 um die Rotationsachse 16 drehbar gelagert. Das Drehlager 12 umfasst einen an der Rotorwelle 10 befestigten Innenring 48 und einen an dem mehrteiligen Pumpenunterteil 68 befestigten Außenring 50, zwischen denen sich die kugelförmigen Wälzelemente befinden. Der Außenring 50 ist durch elastische Elementen 60, 62 parallel und senkrecht zur Rotationsachse 16 schwingfähig in dem Pumpenunterteil 68 gelagert. Die elastischen Elemente 60, 62 können ringförmig ausgestaltet sein und/oder ein elastomeres Material umfassen bzw. daraus bestehen.

Von dem Drehlager 12 in axialer Richtung beabstandet ist ein rotationssymmetrischer Betriebsmittelspeicher 14 vorgesehen, in dem ein Betriebsmittel aufgenommen ist, mit dem das Drehlager 12 zu versorgen ist.

Der Betriebsmittelspeicher 14 ist im Wesentlichen zylindermantelförmig ausgebildet und weist eine im Wesentlichen zylindermantelförmige Innen- und Außenkontur auf. Der Betriebsmittelspeicher 14 ist durch einen Stapel von in axialer Richtung aufeinander gelegten kreisringförmigen flachen Filzscheiben 40 gebildet, die in Bezug auf das Betriebsmittel saugfähig sind und dieses aufnehmen. Der Stapel ist durch einen sich in den zylindrischen Innenraum des Stapels hinein erstreckenden Bodendorn 42 in radialer Richtung fixiert. Ein Zugang zu dem Betriebsmittelspeicher 14 ist durch Abnehmen einer Bodenkappe 58 möglich, beispielsweise zum Zweck der Befüllung des Betriebsmittelspeichers 14.

Die in der Darstellung von Fig. 1 als dritte Filzscheibe 40 von oben gezeigte Filzscheibe 40 umfasst mehrere Abstreifer 44, welche sich direkt an den Betriebsmittelspeicher 14 anschließen und über dessen zylinderförmige Innenkontur in radialer Richtung nach innen abstehen. Die Abstreifer 44 stehen in gleitendem berührendem Kontakt mit einem sich in das Innere des Speichers 14 hinein erstreckenden konischen Abschnitt 30 der Rotorwelle 10, der durch eine an dem axialen Ende der Rotorwelle 10 angeordnete konische Spritzmutter gebildet ist. Das in dem Betriebsmittelspeicher 14 aufgenommene Betriebsmittel wird durch die Abstreifer 44 an dem konischen Abschnitt 30 abgestreift. Der Abschnitt 30 weist einen in axialer Richtung zu dem Drehlager 12 hin kontinuierlich größer werdenden Querschnitt auf. Durch die auf das abgestreifte Betriebsmittel bei dem Betrieb der Pumpe einwirkende Fliehkraft und die Kapillarkraft wird das Betriebsmittel in axialer Richtung auf das Drehlager 12 zu gefördert.

Das dem Drehlager 12 zugeführte Betriebsmittel erfüllt dort seine für den Betrieb des Drehlagers 12 notwendige Funktion wie z.B. eine Schmierung des Drehlagers 12. Dabei sammelt sich das Betriebsmittel an einem Ablauf des Drehlagers 12, welcher an der von dem Speicher 14 abgewandten Seite des Drehlagers 12 angeordnet ist. Im Bereich des Ablaufs weist das Drehlager 12 ein ringförmiges Dichtungselement 64 auf, welches im vorliegenden Ausführungsbeispiel einteilig mit dem Außenring 50 ausgebildet ist und welches einen schmalen Spalt zwischen dem statischen Teil des Drehlagers 12 bzw. dem Pumpenunterteil 68 und dem rotierenden Teil des Drehlagers 12 bzw. der Rotorwelle 10 definiert, wodurch eine Leckage von Betriebsmittel aus dem Betriebsmittelkreislauf, insbesondere in Richtung zu den Pumpenstufen hin, verhindert wird.
Der Außenring 50 des Drehlagers 12 weist mehrere radiale Förderkanäle 52 auf, die sich in radialer Richtung durch den Außenring 50 hindurch erstrecken und das Ablaufen des Betriebsmittels aus dem Drehlager 12 ermöglichen. Durch die radialen Förderkanäle 52 gelangt das Betriebsmittel jeweils zu einem von mehreren kapillaren radialen Fördermitteln 54, welche das Betriebsmittel durch kapillare Wirkung in radialer Richtung weiter nach außen fördern. An dem äußeren Ende der radialen Fördermittel 54 ist jeweils eines von mehreren stabförmigen und in axialer Richtung orientierten kapillaren Fördermitteln 56 vorgesehen, die jeweils in einer Ausnehmung des Pumpenunterteils 68 angeordnet sind und die an einem Ende mit einem der radialen Fördermittel 54 und am anderen Ende mit dem Speicher 14 in Verbindung stehen und das Betriebsmittel durch kapillare Wirkung zurück zu dem Speicher 14 fördern.
Der Speicher 14, die Abstreifer 44, der konische Abschnitt 30, die Kanäle 52 und die Fördermittel 54, 56 bilden mit dem Drehlager 12 einen geschlossenen Betriebsmittelkreislauf, wie in Fig. 1 für die linke Pumpenhälfte durch Pfeile 46 veranschaulicht ist, die die Förderrichtung anzeigen.

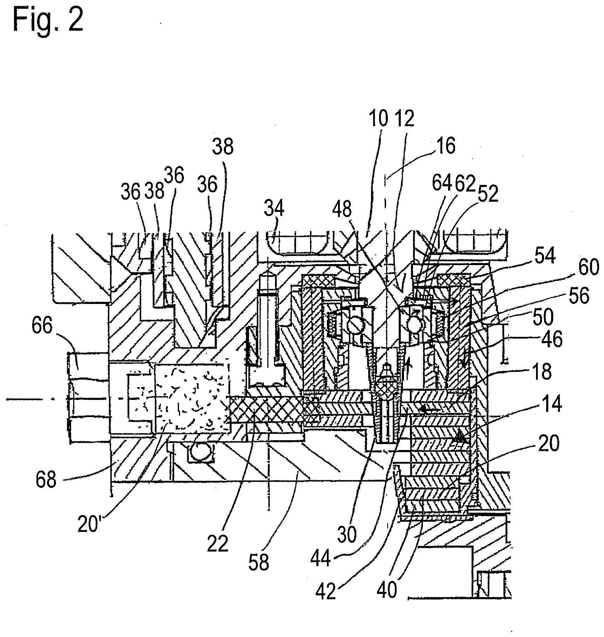

Fig. 2 zeigt eine Vakuumpumpe gemäß einem Beispiel im Axialschnitt. Mit Ausnahme der nachstehend beschriebenen und aus den Figuren ersichtlichen Unterschiede entspricht diese Vakuumpumpe der in Fig. 1 gezeigten Vakuumpumpe.

Der Betriebsmittelspeicher 14 der in Fig. 2 gezeigten Vakuumpumpe weist eine nicht rotationssymmetrische Form auf. Der Betriebsmittelspeicher 14 umfasst einen Primärspeicher 18, welcher durch die drei dem Drehlager 12 nächstgelegenen Filzscheiben 40 gebildet ist und welcher für sich genommen mit Ausnahme der Beschränkung auf drei Filzscheiben 40 und der damit einhergehenden geringeren axialen Bauhöhe dem Betriebsmittelspeicher 14 der in Fig. 1 gezeigten Vakuumpumpe entspricht.

Der Betriebsmittelspeicher 14 umfasst ferner einen Sekundärspeicher 20, der ebenfalls durch einen Stapel von in Axialrichtung aufeinander gelegten Filzscheiben 40 gebildet ist. Der Sekundärspeicher 20 schließt sich in axialer Richtung unmittelbar an den Primärspeicher 18 an und bildet einen axialen Fortsatz zu dem Primärspeicher 18, so dass der Primär- und der Sekundärspeicher 18, 20 zusammen einen durchgehenden ununterbrochenen Aufnahmeraum für das Betriebsmittel bilden. Aus dem Sekundärspeicher 20 austretendes Betriebsmittel gelangt über den Primärspeicher 18 zu dem Drehlager 12.

Der Sekundärspeicher 20 ist nicht rotationssymmetrisch zu der Rotationsachse 16 ausgebildet, sondern besteht aus Filzscheiben 40, die sich nur über einen Teilwinkel um die Rotationsachse 16 herum erstrecken und beispielsweise halbkreisringförmig ausgebildet sind. Dementsprechend wird nur auf der in Fig. 2 rechts dargestellten Seite der Pumpe Raum durch den Sekundärspeicher 20 beansprucht. So kann die auf die linke Seite der Pumpe bezogene axiale Bauhöhe der Pumpe verringert werden, was für bestimmte Anwendungen wünschenswert ist.

Der Speicher 14 umfasst außerdem einen weiteren, ebenfalls nicht rotationssymmetrisch ausgebildeten Sekundärspeicher 20', welcher in radialer Richtung von dem Primärspeicher 18 beabstandet und in einem radialen Randbereich der Pumpe angeordnet ist. Der Sekundärspeicher 20' ist über eine abnehmbare seitliche Verschlusskappe 66 z.B. zur Befüllung zugänglich. Der Sekundärspeicher 20' ist über ein in radialer Richtung orientiertes kapillares Fördermittel 22 mit dem Primärspeicher 18 verbunden, welches durch einen stabförmigen Körper gebildet ist, der sich durch eine entsprechende Ausnehmung des Pumpenunterteils 68 hindurch erstreckt.

Über das Fördermittel 22 kann aus dem Sekundärspeicher 20' austretendes Betriebsmittel in den Primärspeicher 18 und von dort zu dem Drehlager 12 gelangen. Die mittlere Filzscheibe 40 des Primärspeichers 18 weist dazu mehrere sich direkt an den Primärspeicher 18 anschließende Abstreifer 44 auf, welche in gleitendem Kontakt mit dem konischen Abschnitt 30 stehen, über den das abgestreifte Betriebsmittel in der vorstehend in Bezug auf Fig. 1 beschriebenen Weise zu dem Drehlager 12 gefördert wird. Die Rückförderung des Betriebsmittels von dem Drehlager 12 zu dem Speicher 14 unterscheidet sich dadurch von der in Fig. 1 gezeigten Pumpe, dass der radiale Förderkanal 52 sich durch den Außenring 50 und das Pumpenunterteil 68 hindurch direkt bis zu dem axialen Fördermittel 56 erstreckt, welches das Betriebsmittel zurück zu dem Speicher 14 fördert. Zusätzlich ist ein radiales Fördermittel 54 vorgesehen, welches zur Rückführung von jenseits des Dichtungselements 64 angesammeltem Betriebsmittel über das Fördermittel 56 dient. Die radialen Förderkanäle 52 sind vorliegend hohl ausgestaltet, könnten aber auch ein insbesondere kapillares Fördermittel aufnehmen. Prinzipiell könnte die Rückführung von dem Drehlager 12 zu dem Primärspeicher 18 auch in der vorstehend in Bezug auf Fig. 1 beschriebenen Weise ausgestaltet sein.

Der geschlossene Betriebsmittelkreislauf ist in Fig. 2 für die rechte Pumpenhälfte durch Pfeile 46 veranschaulicht. Bevorzugt ist auch der Sekundärspeicher 20' durch ein insbesondere kapillares Fördermittel mit dem Ablauf des Drehlagers 12 verbunden, über das aus dem Drehlager 12 austretendes Betriebsmittel in den Sekundärspeicher 20' gelangt. Es sind bei dieser Ausgestaltung also zwei parallele Rückführungen für das Betriebsmittel vorhanden, von denen eine über den Sekundärspeicher 20' führt und die andere direkt in den Primärspeicher 18 führt.

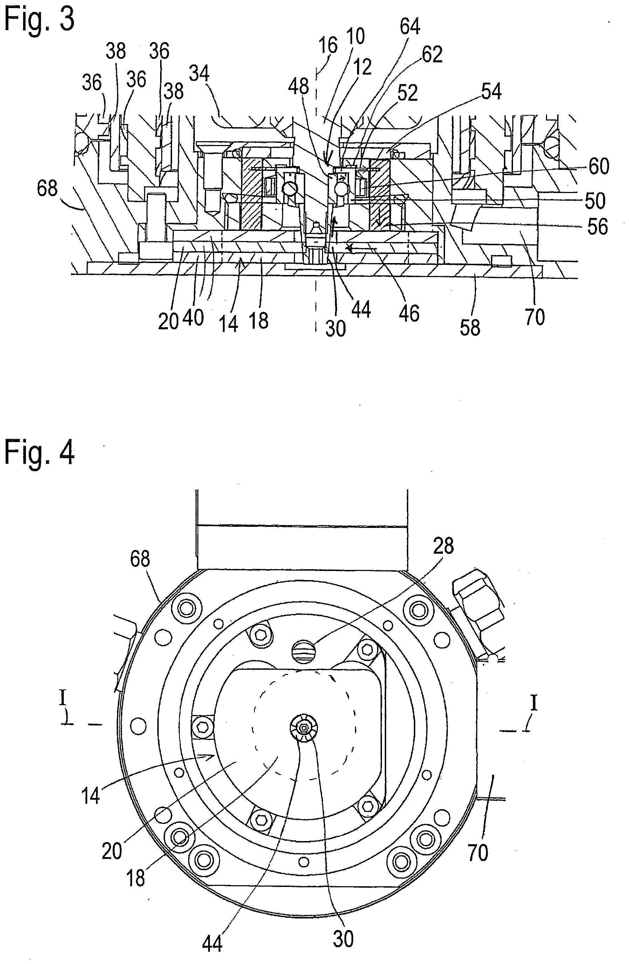

Fig. 3 zeigt eine Vakuumpumpe gemäß einem weiteren Beispiel im Axialschnitt. Mit Ausnahme der nachstehend beschriebenen und aus den Figuren ersichtlichen Unterschiede entspricht die in Fig. 3 gezeigte Vakuumpumpe der in Fig. 2 gezeigten Vakuumpumpe. Die Vakuumpumpe umfasst einen Primärspeicher 18 und einen Sekundärspeicher 20, welcher einen nicht rotationssymmetrischen radialen Fortsatz des zu der Rotationsachse 16 rotationssymmetrischen Primärspeichers 18 bildet. Der Primärspeicher 18 und der Sekundärspeicher 20 sind dabei materialeinheitlich miteinander ausgebildet und sind durch gemeinsame, in Axialrichtung aufeinandergestapelte Filzscheiben 40 gebildet. Die Grenze zwischen dem Primärspeicher 18 und dem Sekundärspeicher 20 ist in Fig. 3 durch gestrichelte Linien veranschaulicht. Durch den radialen Fortsatz des Primärspeichers 18 in Form des Sekundärspeichers 20 wird es ermöglicht, die axiale Bauhöhe des Speichers 14 und der Vakuumpumpe insgesamt besonders gering zu halten.
Wie in Fig. 3 gezeigt, weist der Sekundärspeicher 20 auf der in Fig. 3 rechts dargestellten Seite eine geringere radiale Erstreckung auf als auf der linken Seite, d.h. der Speicher 14 weist auf der rechten Seite eine radiale Aussparung auf. In dieser Aussparung befindet sich die Seitenwand eines Pumpenauslasses 70, wodurch eine optimale Raumausnutzung erreicht wird.
Die in Fig. 3 gezeigte Pumpe umfasst mehrere radiale Förderkanäle 52, in denen jeweils ein sich in radialer Richtung erstreckendes Fördermittel aufgenommen ist. Der sich durch den Außenring 50 hindurch erstreckende Teil der radialen Förderkanäle 52 ist in Fig. 3 jeweils nicht dargestellt. Fig. 4 zeigt die Pumpe von Fig. 3 bei abgenommener Bodenkappe 58 in axialer Richtung von unten gesehen, wobei die Schnittebene, die der Darstellung von Fig. 3 entspricht, in Fig. 4 durch die Linie I-I dargestellt ist. In Fig. 4 ist die nicht rotationssymmetrische Form des Sekundärspeichers 20 erkennbar, wobei die Grenze zwischen Primärspeicher 18 und Sekundärspeicher 20 durch eine gestrichelte Kreislinie dargestellt ist. Der Sekundärspeicher 20 weist zwei radiale Aussparungen auf, wobei in der in Fig. 4 rechts dargestellten Aussparung der Pumpenauslass 70 angeordnet ist und in der in Fig. 4 oben dargestellten Aussparung eine weitere Pumpenkomponente 28 angeordnet ist.
Wie in Fig. 4 gezeigt, ist bei dieser Ausgestaltung der gesamte Speicher 14 über die durch die Bodenkappe 58 abgedeckte Öffnung zugänglich, so dass auf eine wie in Fig. 2 gezeigte seitliche Verschlusskappe 66 für den Zugriff auf den Sekundärspeicher 20 verzichtet werden kann.

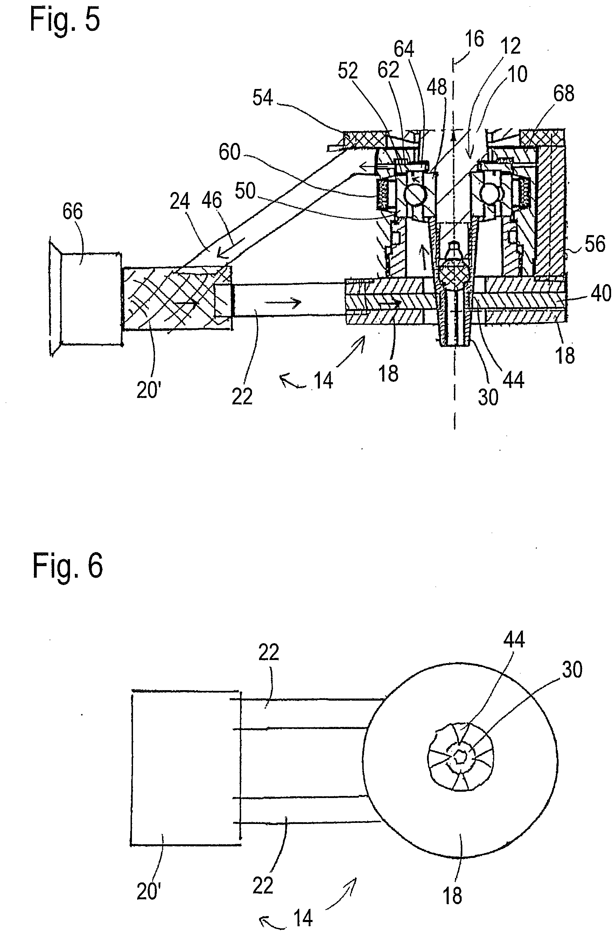

Fig. 5 zeigt eine Pumpe gemäß einem weiteren Beispiel im Axialschnitt. Die Pumpe entspricht im Wesentlichen der in Fig. 2 gezeigten Pumpe, wobei ein in radialer Richtung von dem Primärspeicher 18 beabstandeter Sekundärspeicher 20' vorgesehen ist. In Fig. 5 ist zudem ein kapillares Fördermittel 24 gezeigt, welches mit einem Ablauf des Drehlagers 12 an einem Ende und an dem anderen Ende mit dem Sekundärspeicher 20' verbunden ist, um aus dem Drehlager 12 austretendes Betriebsmittel zu dem Sekundärspeicher 20' zurückzuführen. An dem drehlagerseitigen Ende ist das Fördermittel 24 dabei direkt an einem Ausgang eines radialen Förderkanals 52 angeordnet, welcher mit einem Ablauf des Drehlagers 12 in Verbindung steht. Der Sekundärspeicher 20' ist über mehrere Fördermittel 22 mit dem Primärspeicher 18 verbunden, so dass ein geschlossener, über das Fördermittel 24, den Sekundärspeicher 20', das Fördermittel 22 und den Primärspeicher 18 führender Förderweg für das Betriebsmittel geschaffen wird, welcher in Fig. 5 durch Pfeile 46 veranschaulicht ist. Auf der dem Sekundärspeicher 20' zugewandten, in Fig. 5 links dargestellten Seite kann prinzipiell zusätzlich ein wie in Fig. 5 rechts dargestelltes axiales Fördermittel 56 vorhanden sein, welches den Ablauf des Drehlagers 12 mit dem Primärspeicher 18 verbindet.
Fig. 6 zeigt einen Teil der in Fig. 5 gezeigten Pumpe einschließlich des Betriebsmittelspeichers 14 in axialer Richtung von oben betrachtet. In Fig. 6 sind insbesondere die zwei Fördermittel 22, welche den Sekundärspeicher 20' mit dem Primärspeicher 18 verbinden, und die vier Abstreifer 44 erkennbar, welche mit dem konischen Abschnitt 30 der Rotorwelle in berührendem Kontakt stehen und das von dem Primärspeicher 18 bereitgestellte Betriebsmittel an dem konischen Abschnitt 30 abstreifen.

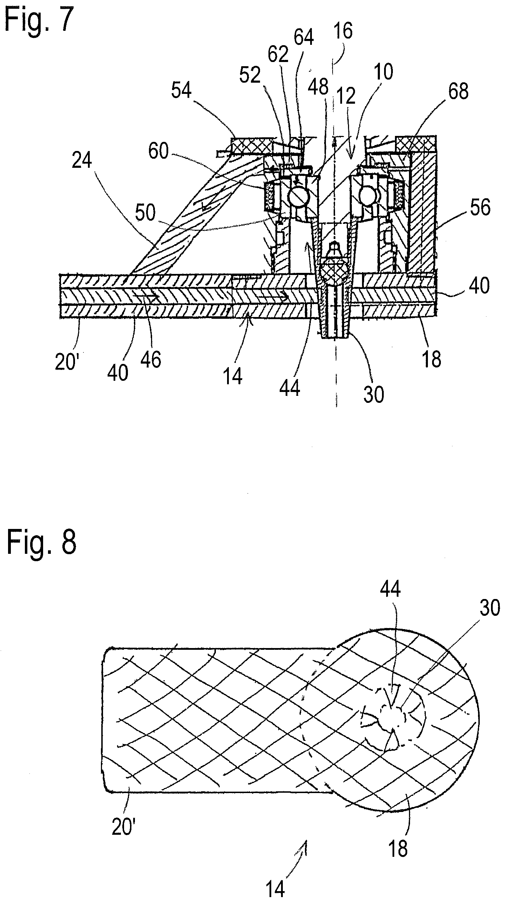

Fig. 7 zeigt eine Vakuumpumpe gemäß einem weiteren Beispiel im Axialschnitt. Die in Fig. 7 gezeigte Pumpe entspricht im Wesentlichen der in Fig. 5 gezeigten Pumpe, wobei allerdings der Sekundärspeicher 20' nicht von dem Primärspeicher 18 beabstandet angeordnet und mit diesem über ein Fördermittel verbunden ist. Stattdessen bildet der nicht rotationssymmetrische Sekundärspeicher 20' einen von dem rotationssymmetrischen Primärspeicher 18 radial nach außen abstehenden Fortsatz des Primärspeichers 18, so dass der Sekundärspeicher 20' und der Primärspeicher 18 zusammen ein zusammenhängendes ununterbrochenes Speichervolumen bilden. Der Primärspeicher 18 und der Sekundärspeicher 20' können dabei durch gemeinsame Filzscheiben 40 gebildet und somit materialeinheitlich miteinander verbunden oder durch voneinander getrennte und insbesondere im Bereich ihrer Stirnseiten aneinander anliegende Filzscheiben 40 gebildet sein.
Fig. 8 zeigt einen Teil der in Fig. 7 gezeigten Pumpe einschließlich des Speichers 14 in axialer Richtung von oben betrachtet, wobei der materialeinheitliche oder durch einander berührende Grenzflächen gebildete Übergang zwischen dem Primärspeicher 18 und dem Sekundärspeicher 20' durch eine gestrichelte Linie dargestellt ist.

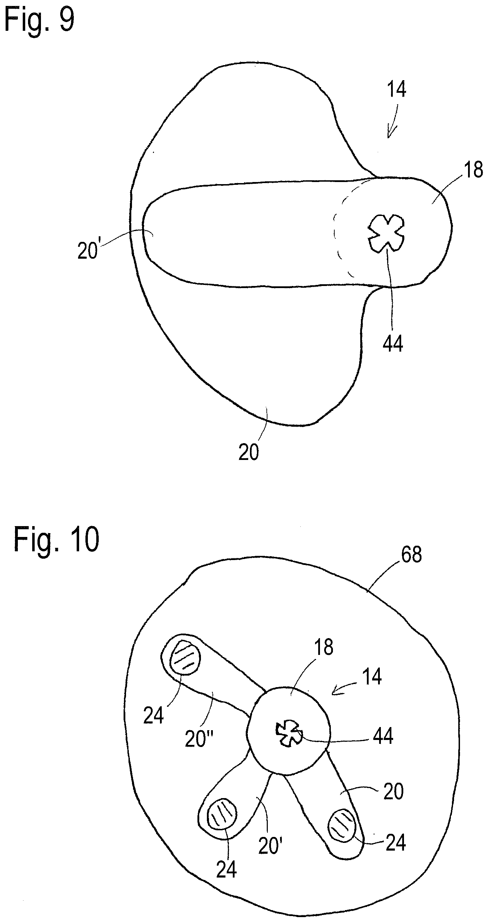

Fig. 9 zeigt einen Betriebsmittelspeicher 14 und die mit diesem verbundenen Abstreifer 44 eines weiteren Beispiels einer Vakuumpumpe in axialer Richtung betrachtet. Der Speicher 14 umfasst einen zu der Rotationsachse rotationssymmetrischen Primärspeicher 18, einen ersten Sekundärspeicher 20, welcher durch einen pilzkopfförmigen Fortsatz des Primärspeichers 18 gebildet ist, sowie einen zweiten Sekundärspeicher 20', welcher gemeinsam mit dem Primärspeicher 18 eine Form bildet, die einer sich durch eine gedachte Translation des Primärspeichers 18 in radialer Richtung ergebenden Form entspricht. Die beiden Sekundärspeicher 20, 20' können sich jeweils nur über einen Teil der axialen Erstreckung des Speichers 14 erstrecken und in axialer Richtung ineinander übergehen oder voneinander beabstandet sein. Es ist auch ein Speicher 14 denkbar, welcher nur einen der in Fig. 9 gezeigten Sekundärspeicher 20, 20' aufweist, wobei sich der jeweilige Sekundärspeicher 20, 20' über die gesamte axiale Erstreckung des Betriebsmittelspeichers 14 erstrecken kann.

Fig. 10 zeigt einen Betriebsmittelspeicher 14 einer Vakuumpumpe gemäß einem weiteren Beispiel in axialer Richtung betrachtet. Der Betriebsmittelspeicher 14 umfasst einen Primärspeicher 18 und drei Sekundärspeicher 20, 20', 20". Außerdem sind in Fig. 10 mehrere mit dem Primärspeicher 18 verbundene Abstreifer 44 dargestellt. Ferner sind ein schematischer Außenumriss des Pumpenunterteils 68 gezeigt sowie mehrere Förderelemente 24, die jeweils mit einem der Sekundärspeicher 20, 20', 20" verbunden sind und den jeweiligen Sekundärspeicher 20, 20', 20" mit einem Ablauf des in Fig. 10 nicht dargestellten Drehlagers 12 der Pumpe verbinden.
Die Sekundärspeicher 20, 20', 20" sind in Fig. 10 jeweils als gegenüber dem zu der Rotationsachse rotationssymmetrischen Primärspeicher 18 in radialer Richtung nach außen hervorstehende keulenförmige Fortsätze ausgebildet. Die Sekundärspeicher 20, 20', 20" können sich dabei jeweils über die gesamte oder nur einen Teil der axialen Ausdehnung des Speichers 14 erstrecken.
Die in Fig. 10 gezeigten Sekundärspeicher 20, 20', 20" sind in Umfangsrichtung um die Rotationsachse herum in ungleichmäßigen Winkelabständen verteilt angeordnet. Prinzipiell ist auch eine gleichmäßig verteilte Anordnung mehrerer Sekundärspeicher 20, 20', 20" möglich, ebenso wie ein Speicher 14 mit einer geringeren oder größeren Anzahl von in Umfangsrichtung gleichmäßig oder ungleichmäßig verteilt angeordneten Sekundärspeichern 20, 20', 20".

### Bezugszeichenliste

- 10: Rotorwelle
- 12: Drehlager
- 14: Betriebsmittelspeicher
- 16: Rotorachse
- 18: Primärspeicher
- 20, 20', 20": Sekundärspeicher
- 22: Fördermittel
- 24: Fördermittel
- 28: Pumpenkomponente
- 30: konischer Abschnitt
- 34: Antriebseinheit
- 36: Holweckgewinde
- 38: Holweckhülse
- 40: Filzscheibe
- 42: Bodendorn
- 44: Abstreifer
- 46: Pfeil
- 48: Innenring
- 50: Außenring
- 52: radialer Förderkanal
- 54: radiales Fördermittel
- 56: Fördermittel
- 58: Bodenkappe
- 60: elastisches Element
- 62: elastisches Element
- 64: Dichtungselement
- 66: Verschlusskappe
- 68: Pumpenunterteil
- 70: Pumpenauslass

## Patentansprüche

1. Vakuumpumpe, insbesondere Turbomolekularpumpe, mit einer Rotorwelle (10), einem Drehlager (12) zur drehbaren Unterstützung der Rotorwelle (10) und einem Betriebsmittelspeicher (14) zur Aufnahme eines Betriebsmittels, mit dem das Drehlager (12) zu versorgen ist,
wobei der Betriebsmittelspeicher (14) bezüglich einer Rotationsachse (16) des Drehlagers (12) eine nicht rotationssymmetrische Form besitzt und sich in einem in der Vakuumpumpe zur Verfügung stehenden Bauraum befindet,
wobei der Betriebsmittelspeicher (14) einen rotationssymmetrisch zu der Rotationsachse (16) des Drehlagers (12) ausgebildeten Primärspeicher (18) und wenigstens einen Sekundärspeicher (20, 20', 20") umfasst, wobei ein Förderweg für das Betriebsmittel von dem Sekundärspeicher (20, 20', 20") über den Primärspeicher (18) zu dem Drehlager (12) führt und
wobei der Sekundärspeicher (20, 20', 20") bezogen auf die Rotationsachse (16) des Drehlagers (12) in axialer Richtung weiter von dem Drehlager (12) beabstandet ist als der Primärspeicher (18),
**dadurch gekennzeichnet, dass**
der Sekundärspeicher (20, 20', 20") mit einem Fördermittel (24) verbunden ist, welches dazu ausgebildet ist, Betriebsmittel von dem Drehlager (12) zu dem Sekundärspeicher (20, 20', 20") zu fördern.

2. Vakuumpumpe nach Anspruch 1,
**dadurch gekennzeichnet, dass**
der Sekundärspeicher (20, 20', 20") bezogen auf die Rotationsachse (16) des Drehlagers (12) in radialer Richtung weiter von dem Drehlager (12) beabstandet ist als der Primärspeicher (18).

3. Vakuumpumpe nach Anspruch 1 oder 2,
**dadurch gekennzeichnet, dass**
der Sekundärspeicher (20, 20', 20") einen Fortsatz des Primärspeichers (18) bildet.

4. Vakuumpumpe nach einem der Ansprüche 1 oder 2,
**dadurch gekennzeichnet, dass**
der Sekundärspeicher (20, 20', 20") von dem Primärspeicher (18) räumlich getrennt ist, wobei vorzugsweise der Sekundärspeicher (20, 20', 20") über ein Fördermittel (22) für das Betriebsmittel mit dem Primärspeicher (18) verbunden ist.

5. Vakuumpumpe nach einem der vorhergehenden Ansprüche,
**dadurch gekennzeichnet, dass**
mehrere Sekundärspeicher (20, 20', 20") vorgesehen sind, wobei bevorzugt die Sekundärspeicher (20, 20', 20") in Umfangsrichtung um die Rotationsachse (16) des Drehlagers (12) verteilt angeordnet sind.

6. Vakuumpumpe nach einem der vorhergehenden Ansprüche,
**dadurch gekennzeichnet, dass**
eine von dem Drehlager (12) und der Betriebsmittelversorgung unabhängige Pumpenkomponente (28, 70) zumindest teilweise in einer Aussparung des Betriebsmittelspeichers (14) angeordnet ist, durch die sich die Form des Betriebsmittelspeichers (14) von einer, insbesondere zu der Rotationsachse (16) des Drehlagers (12), rotationssymmetrischen Form unterscheidet.

7. Vakuumpumpe nach einem der vorhergehenden Ansprüche,
**dadurch gekennzeichnet, dass**
der Betriebsmittelspeicher (14) ein saugfähiges und insbesondere filzartiges Material umfasst.

8. Vakuumpumpe nach einem der vorhergehenden Ansprüche,
**dadurch gekennzeichnet, dass**
die Rotorwelle (16) einen insbesondere konischen Abschnitt (30) umfasst, welcher dazu ausgebildet ist, von dem Betriebsmittelspeicher (14) bereitgestelltes Betriebsmittel zu dem Drehlager (12) zu fördern.

## Claims

1. A vacuum pump, in particular a turbomolecular pump, comprising a rotor shaft (10); a rotary bearing (12) for the rotatable support of the rotor shaft (10); and an operating medium store (14) for the reception of an operating medium with which the rotary bearing (12) is to be supplied,
wherein the operating medium store (14) has a non-rotationally symmetrical shape with respect to an axis of rotation (16) of the rotary bearing (12) and is located in a construction space available in the vacuum pump;
wherein the operating medium store (14) comprises a primary store (18) configured rotationally symmetrical with respect to the axis of rotation (16) of the rotary bearing (12) and at least one secondary store (20, 20', 20"); wherein a conveying path for the operating medium leads from the secondary store (20, 20', 20") via the primary store (18) to the rotary bearing (12); and
wherein the secondary store (20, 20', 20"), with respect to the axis of rotation (16) of the rotary bearing (12), is spaced further apart from the rotary bearing (12) in the axial direction than the primary store (18),
**characterized in that**
the secondary store (20, 20', 20") is connected to a conveying means (24) which is configured to convey the operating medium from the rotary bearing (12) to the secondary store (20, 20', 20").

2. A vacuum pump in accordance with claim 1,
**characterized in that**
the secondary store (20, 20', 20"), with respect to the axis of rotation (16) of the rotary bearing (12), is spaced further apart from the rotary bearing (12) in the radial direction than the primary store (18).

3. A vacuum pump in accordance with claim 1 or claim 2,
**characterized in that**
the secondary store (20, 20', 20") forms an extension of the primary store (18).

4. A vacuum pump in accordance with one of the claims 1 or 2,
**characterized in that**
the secondary store (20, 20', 20") is spatially separate from the primary store (18), with preferably the secondary store (20, 20', 20") being connected to the primary store (18) via a conveying means (22) for the operating medium.

5. A vacuum pump in accordance with any one of the preceding claims,
**characterized in that**
a plurality of secondary stores (20, 20', 20") are provided, with preferably the secondary stores (20, 20', 20") being arranged distributed about the axis of rotation (16) of the rotary bearing (12) in the peripheral direction.

6. A vacuum pump in accordance with any one of the preceding claims,
**characterized in that**
a pump component (28, 70) which is independent of the rotary bearing (12) and of the operating medium supply is at least partly arranged in a cut-out of the operating medium store (14) due to which cut-out the shape of the operating medium store (14) differs from a rotationally symmetrical shape which is in particular rotationally symmetrical with respect to the axis of rotation (16) of the rotary bearing (12).

7. A vacuum pump in accordance with any one of the preceding claims,
**characterized in that**
the operating medium store (14) comprises an absorbent material, in particular a felt-like absorbent material.

8. A vacuum pump in accordance with any one of the preceding claims,
**characterized in that**
the rotor shaft (16) comprises a section (30), in particular a conical section, which is configured to convey the operating medium to the rotary bearing (12), said operating medium being made available by the operating medium store (14).

## Revendications

1. Pompe à vide, en particulier pompe turbomoléculaire, comportant un arbre de rotor (10), un palier de rotation (12) pour le support rotatif de l'arbre de rotor (10) et un réservoir à lubrifiant (14) pour recevoir un lubrifiant destiné à alimenter le palier de rotation (12),
dans laquelle
le réservoir à lubrifiant (14) possède une forme non pas à symétrie de révolution par rapport à un axe de rotation (16) du palier de rotation (12) et se trouve dans un espace structurel disponible dans la pompe à vide,
le réservoir à lubrifiant (14) comprend un réservoir primaire (18) réalisé à symétrie de révolution par rapport à l'axe de rotation (16) du palier de rotation (12) et au moins un réservoir secondaire (20, 20', 20"),
un trajet de convoyage pour le lubrifiant mène depuis le réservoir secondaire (20, 20', 20") jusqu'au palier de rotation (12) via le réservoir primaire (18), et
par rapport à l'axe de rotation (16) du palier de rotation (12), le réservoir secondaire (20, 20', 20") est espacé plus loin du palier de rotation (12) en direction axiale que le réservoir primaire (18),
**caractérisée en ce que**
le réservoir secondaire (20, 20', 20") est relié à un moyen de convoyage (24) qui est réalisé pour convoyer le lubrifiant depuis le palier de rotation (12) jusqu'au réservoir secondaire (20, 20', 20").

2. Pompe à vide selon la revendication 1,
**caractérisée en ce que**
par rapport à l'axe de rotation (16) du palier de rotation (12), le réservoir secondaire (20, 20', 20") est espacé plus loin du palier de rotation (12) en direction radiale que le réservoir primaire (18).

3. Pompe à vide selon la revendication 1 ou 2,
**caractérisée en ce que**
le réservoir secondaire (20, 20', 20") forme un prolongement du réservoir primaire (18).

4. Pompe à vide selon l'une des revendications 1 ou 2,
**caractérisée en ce que**
le réservoir secondaire (20, 20', 20") est séparé dans l'espace du réservoir primaire (18), et de préférence le réservoir secondaire (20, 20', 20") est relié au réservoir primaire (18) via un moyen de convoyage (22) pour le lubrifiant.

5. Pompe à vide selon l'une des revendications précédentes,
**caractérisée en ce que**
il est prévu plusieurs réservoirs secondaires (20, 20', 20"), et les réservoirs secondaires (20, 20', 20") sont agencés en répartition en direction périphérique autour de l'axe de rotation (16) du palier de rotation (12).

6. Pompe à vide selon l'une des revendications précédentes,
**caractérisée en ce que**
un composant de pompe (28, 70) indépendant du palier de rotation (12) et de l'alimentation en lubrifiant est agencé au moins partiellement dans une échancrure du réservoir à lubrifiant (14), par laquelle la forme du réservoir à lubrifiant (14) se distingue d'une forme à symétrie de révolution en particulier par rapport à l'axe de rotation (16) du palier de rotation (12).

7. Pompe à vide selon l'une des revendications précédentes,
**caractérisée en ce que**
le réservoir à lubrifiant (14) comprend un matériau absorbant et en particulier de type feutre.

8. Pompe à vide selon l'une des revendications précédentes,
**caractérisé en ce que**
l'arbre de rotor (16) comprend une portion en particulier conique (30) qui est réalisée pour convoyer le lubrifiant mis à disposition par le réservoir à lubrifiant (14) jusqu'au palier de rotation (12).
